# EUROPEAN PATENT APPLICATION

(11) **EP 3 391 992 A2**
(43) Date of publication of application: **24.10.2018**
(21) Application number: 18165113.4
(22) Date of filing: 29.03.2018
(51) Int. Cl.: B23Q 1/01, B23Q 16/02, B23Q 16/08

(54) **GANTRY TABLE WITH ADJUSTABLE RAILS**

(30) Priority: 31.03.2017 US 201762479447 P; 16.03.2018 US 201815923318
(71) Applicant: Lincoln Global, Inc., Santa Fe Springs, CA 90670 (US)
(72) Inventor: Tinsley, Sheramie, Dayton, NV Nevada 89403 (US)
(74) Representative: Grosse Schumacher Knauer von Hirschhausen

(57) **Abstract**

A gantry table includes a table main body. A gantry rail (26) extends along the table main body, and a gantry rack (24) extends along the table main body. The gantry table includes a gantry (16) comprising a pinion gear (22) that engages the gantry rack (24). The pinion gear (22) drives the gantry (16) to move along the table main body on the gantry rail (26) . A tool bracket (14) is movable along the gantry (16). The gantry table further includes a first adjustment bar (34) and a second adjustment bar (34). The gantry rail (26) and the gantry rack (24) are attached to both of the first adjustment bar (34) and the second adjustment bar (34). A joiner plate joins the first adjustment bar to the second adjustment bar. The gantry table includes a vertical adjustment that is configured to adjust a vertical position of the joiner plate with respect to the table main body. The gantry table further includes a depth adjustment (42) configured to adjust a lateral position of the joiner plate with respect to the table main body.

## Description

Benefit of U.S. Provisional Patent Application Serial Number 62/479,447 filed March 31, 2017, is hereby claimed and the disclosure incorporated herein by reference.

### FIELD OF THE INVENTION

The invention is related to a gantry table according to claim 1 and 6 and to a plasma cutting table according to claim 12. The present invention relates to gantry tables, in particular to CNC plasma cutting tables having a cutting torch mounted on a gantry.

### TECHNICAL BACKGROUND

It is known to provide a CNC plasma cutting table having a cutting torch mounted to a gantry. The gantry can move along the length of the cutting table on tracks or rails. The torch is held in a movable clamp or bracket that is mounted to the gantry. The movable clamp or bracket moves the torch along the gantry, between lateral sides of the cutting table. Thus, the torch is movable in two perpendicular directions, such as in an X direction along the length of the gantry and in a Y direction along the length of the table as the gantry moves.

### DESCRIPTION

In order to improve CNC plasma cutting, a gantry table according to claim 1 and 6 is described and a plasma cutting table according to claim 12. Preferred embodiments are subject of the subclaims. The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a gantry table. The gantry table includes a table main body. A gantry rail extends along the table main body, and a gantry rack extends along the table main body. The gantry table includes a gantry comprising a pinion gear that engages the gantry rack. The pinion gear drives the gantry to move along the table main body on the gantry rail. A tool bracket is movable along the gantry. The gantry table further includes a first adjustment bar and a second adjustment bar. The gantry rail and the gantry rack are attached to both of the first adjustment bar and the second adjustment bar. A joiner plate joins the first adjustment bar to the second adjustment bar. The gantry table includes a vertical adjustment that is configured to adjust a vertical position of the joiner plate with respect to the table main body. The gantry table further includes a depth adjustment configured to adjust a lateral position of the joiner plate with respect to the table main body.

In accordance with another aspect of the present invention, provided is a gantry table. The gantry table includes a table main body. A gantry rail extends along the table main body, and a gantry rack extends along the table main body. The gantry table includes a gantry comprising a pinion gear that engages the gantry rack. The pinion gear drives the gantry to move along the table main body on the gantry rail. A tool bracket is movable along the gantry. The gantry table includes a plurality of adjustment bars. The plurality of adjustment bars adjustably attach the gantry rail and the gantry rack to the table main body. The gantry table further includes a plurality of depth adjustments configured to adjust lateral positions of the plurality of adjustment bars with respect to the table main body. The gantry table includes a plurality of vertical adjustments configured to adjust vertical positions of the plurality of adjustment bars with respect to the table main body.

In accordance with another aspect of the present invention, provided is a plasma cutting table. The plasma cutting table includes a table main body. A gantry rail extends along the table main body, and a gantry rack extends along the table main body. The plasma cutting table includes a gantry comprising a pinion gear that engages the gantry rack. The pinion gear drives the gantry to move along the table main body on the gantry rail. A plasma torch bracket is movable along the gantry. The plasma cutting table further includes a first adjustment bar and a second adjustment bar. The gantry rail and the gantry rack are attached to both of the first adjustment bar and the second adjustment bar. A joiner plate joins the first adjustment bar to the second adjustment bar. The plasma cutting table includes a jacking plate. A first screw adjustment extends between the jacking plate and the joiner plate and is configured for adjusting a vertical position of the joiner plate with respect to the jacking plate. A second screw adjustment is configured for adjusting a lateral position of the joiner plate with respect to the table main body.

### BRIEF DESCRIPTION OF THE DRAWING

The drawings comprises:
FIG. 1 is a perspective view of a plasma cutting table;
FIG. 2 is a perspective view of a portion of the plasma cutting table;
FIG. 3 is a perspective view of a portion of the plasma cutting table;
FIG. 4 is a perspective view of a portion of the plasma cutting table;
FIG. 5 is a perspective view of a portion of the plasma cutting table;
FIG. 6 is a perspective view of a portion of the plasma cutting table;
FIG. 7 is a perspective view of a portion of the plasma cutting table;
FIG. 8 is a perspective view of a portion of the plasma cutting table;
FIG. 9 is a perspective view of an eccentric bushing; and
FIG. 10 is a front view of the eccentric bushing.

### DETAILED DESCRIPTION

Embodiments of the present invention relate to gantry tables or CNC (computer numeric control) tables, such as CNC plasma cutting tables. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

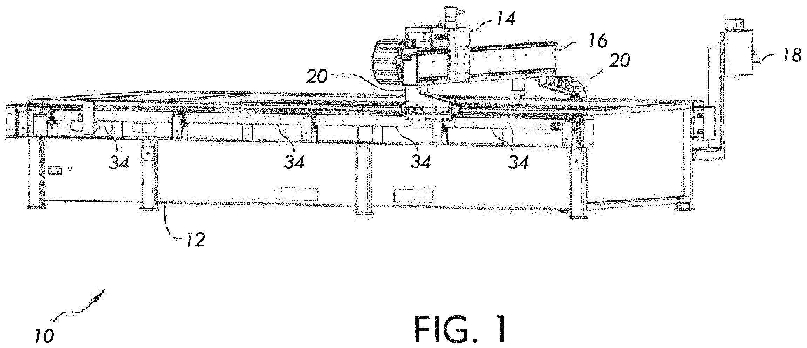

Figure 1 shows an example gantry table. The gantry table in Fig. 1 is a plasma cutting table 10 and the invention will be discussed in the context of a plasma cutting table. However, aspects of the invention are applicable to other types of gantry tables for performing CNC operations on a workpiece, and the invention need not be limited to plasma cutting tables.

The plasma cutting table 10 has a main body 12 upon which a workpiece, such as a metal sheet or plate, is placed. A plasma cutting torch (not shown) is attached to a movable tool bracket 14 or plasma torch bracket, that can move back and forth along a gantry 16 (e.g., in an X direction). The gantry 16 can move back and forth along the length of the cutting table's main body 12 on tracks or rails (e.g., in a Y direction). The plasma cutting table 10 can be programmed to make precise cuts in the workpiece through controlled movements of the bracket 14 and gantry 16 in the X and Y directions, respectively. In certain embodiments, the tool bracket 14 can move the tool vertically toward and away from the workpiece in a Z direction, so that the tool can be moved in three perpendicular directions.

The plasma cutting table 10 can include an upper water chamber located adjacent the workpiece, and a lower water chamber located beneath the upper water chamber. During a plasma cutting operation, the upper water chamber is filled with water. The water can be drained into the lower water chamber to allow the upper water chamber to be cleaned. Compressed air can be used to pressurize the lower water chamber and return the water to the upper water chamber. The plasma cutting table 10 can be connected to a source of compressed air and can include valves, such as solenoid valves, for controlling the draining of the upper water chamber and emptying of the lower water chamber. Operation of the valves can be controlled by a control system, and can be operated automatically or manually through a human-machine interface (HMI) 18 of the plasma cutting table 10.

The gantry 16 is mounted to a respective foot portion 20 located on either side of the gantry. The foot portions 20 move along gantry rails that are mounted to the main body

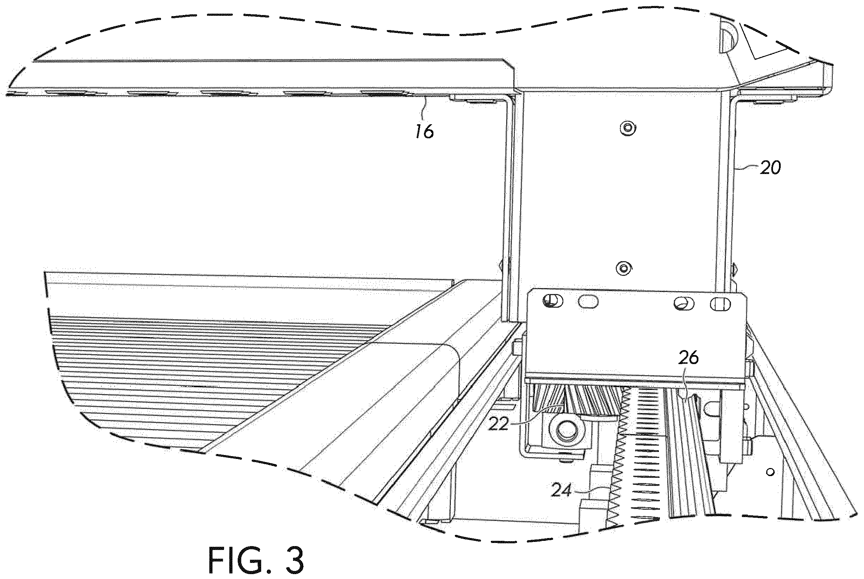

12 of the cutting table 10. As best shown in Fig. 3, the foot portion 20 of the gantry 16 includes a pinion gear 22 that engages a rack 24 gear, which extends along the table main body. Example pinion gears 22 include helical and spur gears. A gantry rail 26 also extends along the table main body, generally parallel with the rack 24. The rail 26 can be separate from the rack 24 or attached to the rack. The foot portion 20 of the gantry 16 rides along the rail, such as on wheels, bearings, etc. A motor (not shown) or driven pulley or gear can be located within the foot portion 20 and coupled to the pinion gear 22. The motor, pulley, gear, etc. drives the pinion gear 22 to move the foot portion 20 along the rack 24 and rail 26, to thereby position the gantry 16 in the Y direction along the length of the cutting table 10. Both lateral sides of the cutting table 10 can have a similar rack, pinion and rail system for moving the gantry 16 along the table.

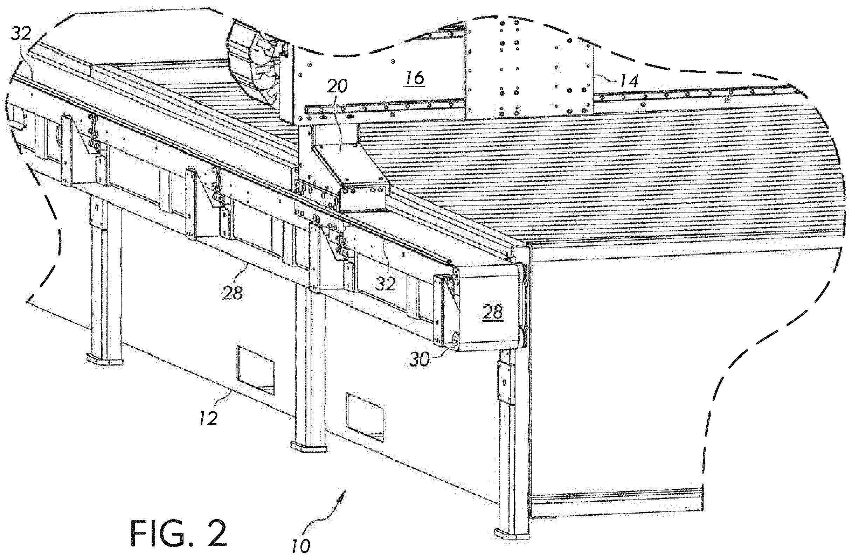

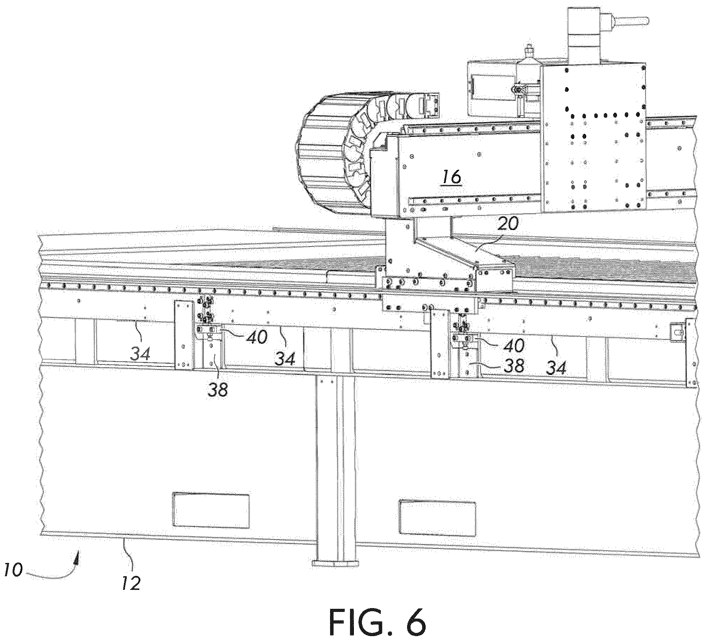

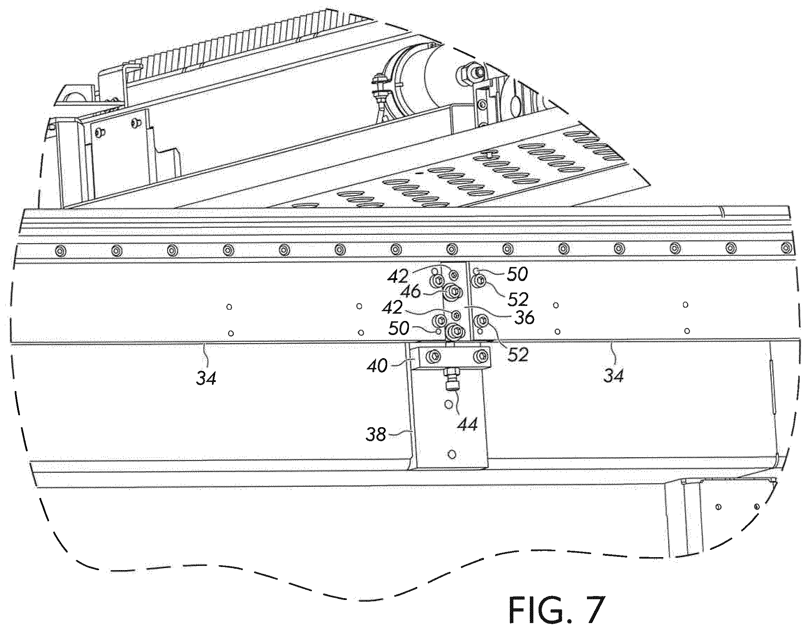

With reference to Fig. 2, the drive system for the gantry 16 can include a belt 28 that is similar to an endless belt but is attached to the front and rear sides of the foot portion 20 of the gantry. The belt 28 passes over rollers 30 located at both ends of the cutting table 10 and wraps around the drive system for the gantry 16. The cutting table 10 can include belt guides 32 to correctly position the belt 28. The belt 28 can be any suitable flexible material, such as a metallic band, a rubber belt, and the like. The belt 28 serves to protect the rack and pinion gear from direct spray during a cutting operation and from accumulating debris. The belt 28 also serves as a barrier to access of the rack and pinion during operation of the cutting table 10. The belt 28 can be seen in Figs. 1 and 2, but is removed in Figs. 3-7. In an alternative embodiment, the belt 28 and rollers 30 can be replaced with a solid guard that does not move with the gantry. For example, the rack 24 could be located beneath the rail 26, and the foot portion 20 of the gantry 16 can be located substantially lateral of or beyond the rack and rail system (e.g., with the pinion 22 and bearings projecting inward to engage the rack and rail). In such an embodiment, the solid guard can extend laterally over the rack 24 and rail 26, and the foot portion 20 can move back and forth along the cutting table 10 and solid guard, just outside of the guard.

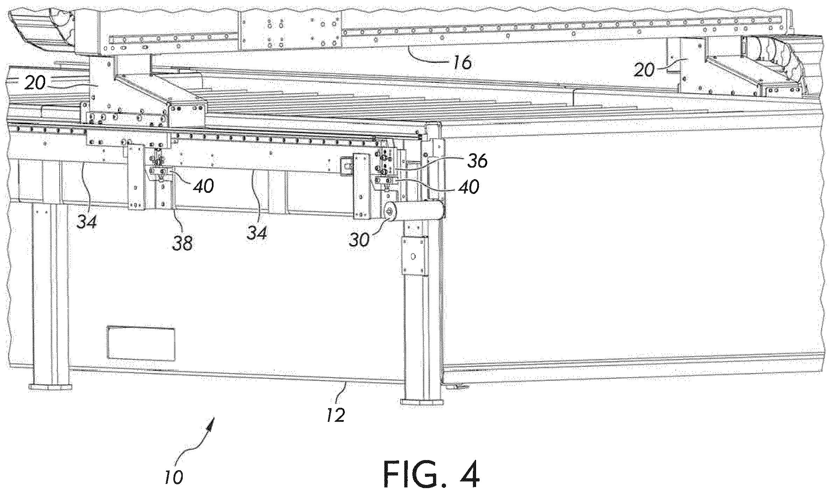

For optimal mechanical performance of the gantry 16, the racks 24 and rails 26 for the gantry foot portions 20 on either side of the cutting table 10 should be correctly aligned parallel with each other and with respect to the length of the cutting table. The cutting table 10 includes an adjustment system for adjusting the vertical position of the racks and rails, and their lateral offset from the main body of the cutting table, at various adjustment points along the table. The adjustment system will be discussed with reference to Figs. 4-10.

The racks 24 and rails 26 are attached to a series of adjustment bars 34 and joiner plates 36. The joiner plates 36 are located between the adjustment bars 34 and at the terminal ends of the adjustment bars and serve to attach the adjustment bars 34 to the main body 12 of the cutting table 10. Moreover, the joiner plates 36 allow adjustment of the position of the adjustment bars 34 with respect to the main body 12 of the cutting table. By adjusting the position of the joiner plates 36 (e.g., up and down and in and out with respect to the cutting table main body), the final position of the adjustment bars 34 and the attached rack and rail system can be adjusted and properly aligned. Alternatively, the adjustment bars 34 can be attached directly to the main body 12 of the cutting table 10 without joiner plates 36, and vertical and lateral adjustments to the position of the adjustment bars can be made on the adjustment bars themselves rather than to the joiner plates as described in below.

Each lateral side of the cutting table 10 can include a suitable number of adjustments bars 34 as desired, such as two, three, four, five, six, more than six, etc. In the example embodiment shown in the figures, the cutting table 10 includes four adjustment bars 34 on each lateral side of the table, and five joiner plates 36 (three joiner plates located between adjustment bars and two joiner plates located at the terminal ends of the adjustment bars). The racks 24 and rails 26 are longer than the adjustment bars 34 and are attached to multiple adjustment bars. In certain embodiments, the cutting table 10 has a single rack 24 and single rail 26 on each lateral side of the table, and the single rack 24 and rail 26 are attached to each of the adjustment bars 34 on that side, and to the joiner plates if present.

In certain embodiments, the main body 12 of the cutting table 10 includes a series of leveling pads 38 to which the joiner plates 36 are attached. The position of the leveling pads 38 with respect to the main body 12 of the cutting table can be fixed (i.e., not adjustable). The leveling pads 38 can be attached to the main body 12 in any suitable fashion, such as by welding or via the use of appropriate fasteners (e.g., bolting, screwing, etc.) Each leveling pad 38 is aligned with a joiner plate 36 and is located between the table main body 12 and a corresponding joiner plate.

The cutting table 10 includes a plurality of depth adjustments 42 for adjusting the lateral positions of the adjustment bars 34 (and, thus, the attached rack 24 and rail 26) with respect to the table main body 12. In the embodiments shown in the figures, the joiner plates 36 include the depth adjustments 42, which set the lateral positions of the joiner plates, such as their offset from the leveling pads 38. The depth adjustments 42 can be screw adjustments (e.g., set screws) that can be threaded into the joiner plates 36 to contact the leveling pads 38 and push the joiner plates outward from the leveling pads 38. Thus, the joiner plates 36 can be moved inward and outward with respect to the leveling pads 38 and the main body 12 of the cutting table 10 via the depth adjustments 42. The depth adjustments 42 could take any form suitable for moving the joiner plates 36 toward and away from the leveling pads 38, such as a small ball screw, an adjustable wedge or shim, and the like.

The cutting table 10 further includes a plurality of vertical adjustments for adjusting the vertical positions of the adjustments bars 34 (and, thus, the attached rack 24 and rail 26) with respect to the table main body 12. In the embodiments shown in Figs. 4-8, jacking plates 40 are attached to the leveling pads 38 and are used to adjust the vertical position of the joiner plates 36 and their attached adjustment bars 34. The jacking plates 40 include one or more vertical actuators 44 that raise and lower the joiner plates 36 along the leveling pads 38. The vertical actuators 44 can extend from and retract toward the jacking plates 40 to adjust the vertical positions of the joiner plates 36 with respect to the jacking plates. The vertical actuators 44 can be in the form of screw adjustment, such as set screws, cap screws, and the like, upon which the joiner plate 36 sits. Similar to the depth adjustments 42, the vertical actuators 44 could take any form suitable for moving the joiner plates 36 upward and downward with respect to the leveling pads 38. The vertical actuators 44 extend between the jacking plates 40 and the joiner plates 36 and can pass through the jacking plates as shown. For example, the vertical actuator 44 can pass through a threaded hole in the jacking plate 36.

After the joiner plate 36 is properly positioned by adjusting the depth and vertical adjustments, the position of the joiner plate 36 on the leveling pad 38 is fixed by screwing or bolting the joiner plate to the leveling pad. Cap screws 46 are shown in the example embodiments for securing the joiner plate 36 to the leveling pad 38. Through holes in the joiner plate 36 for the cap screws 46 can be slightly oversized to provide some "play", to accommodate positioning of the joiner plate 36 on the leveling pad 38.

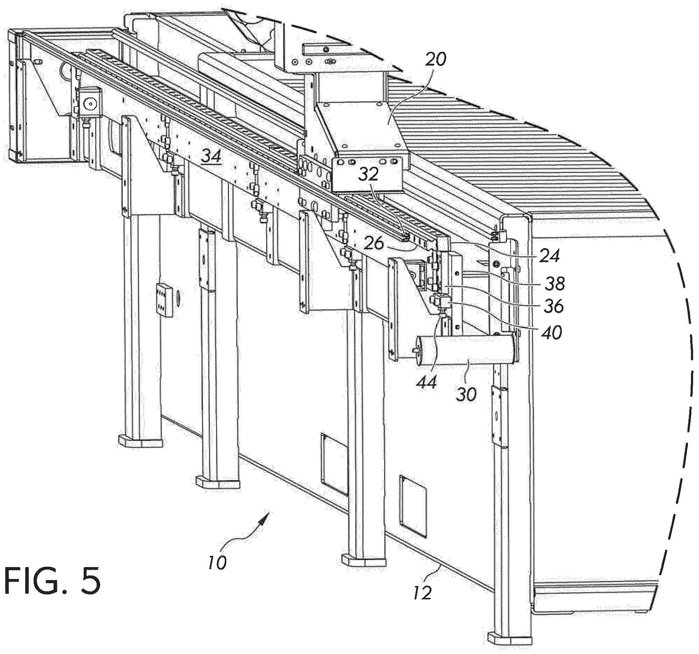

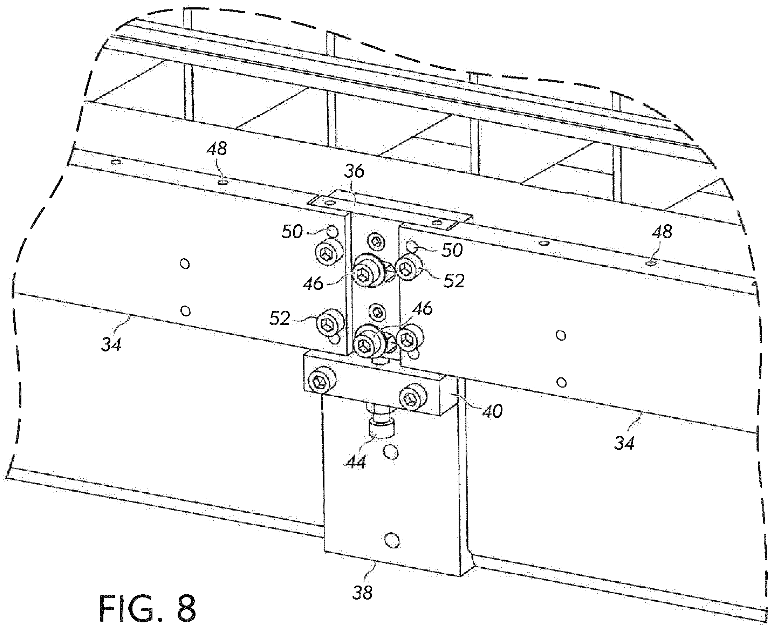

The adjustment bars 34, and the rack and rail system for the gantry, would typically be connected to the joiner plates 36 during adjustment of the joiner plates. As best seen in Fig. 8, the adjustment bars 34 and joiner plates 36 can include threaded holes 48 for attaching the rack and rail system to the adjustment bars and joiner plates. The rack and rail system is not shown in Fig. 8. The rack 24 and rail 26 system mounted to the adjustment bars 34 and joiner plates 36 can be seen in Fig. 5. The vertical and lateral positions of the adjustment bars 34 can be adjusted to ensure that the racks 24 and rails 26 are substantially straight and parallel to the table main body 12 and to each other.

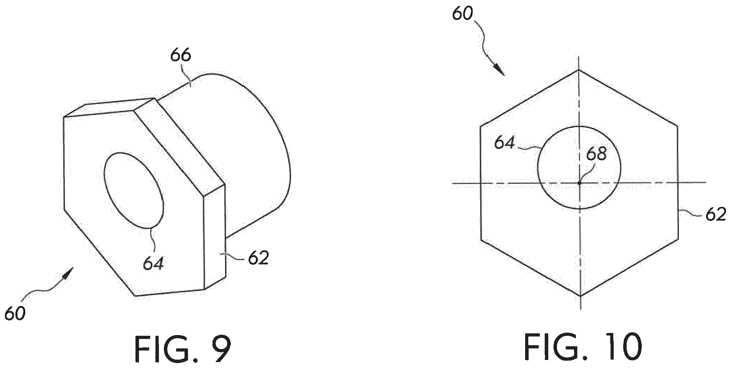

An alternative vertical adjustment to the jacking plate and screw system discussed above is shown in Figs. 9 and 10. Figures 9 and 10 show an eccentric bushing 60 that can be rotated to lift/lower the joiner plates 36 and/or the adjustment bars 34. The eccentric bushing 60 has a head 62, a through hole 64, and a cam portion 66. The through hole 64 is offset from a central axis 68 of the cam portion. A screw, such as the cap screw 46 discussed above for securing the joiner plate, passes through the through hole 64. When the eccentric bushing 60 is rotated via the head 62, the cam portion 66 lifts or lowers the joiner plates 36 and/or the adjustment bars 34. The screw passing through the through hole 64 (e.g., cap screw 46) can then be tightened to fix the position of the eccentric bushing 60.

Returning to Fig. 8, the adjustment bars 34 can be attached to the joiner plates 36 in any suitable manner. In the example embodiment shown in the figures, the adjustment bars 34 are thicker than the joiner plates 36 and are formed to have L-shaped ends that overlap the joiner plates. The adjustment bars 34 are attached to the joiner plates 36 through the overlapping portions of the adjustment bars. The adjustment bars 34 can be screwed to the joiner plates 36 through the overlapping portions, for example. The joiner plates 36 can further include dowel pins 50 for positioning the adjustment bars 34 on the joiner plates. Alternatively or additionally, dowel pins 50 can be located on the table main body 12 for positioning the adjustment bars 34 along the table main body. The screws 52 that attach the adjustment bars 34 to the joiner plate 36 can be left loose while the position of the joiner plate is adjusted. After the joiner plate 36 is properly positioned by adjusting the depth 42 and vertical 40, 44 adjustments, the screws 52 that attach the adjustment bars 34 to the joiner plate can be tightened.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

**REFERENCE NUMBERS**

| | | | |
|---|---|---|---|
| 10 | plasma cutting table | 40 | plate / adjustment |
| 12 | main body | 42 | depth adjustment |
| 14 | tool bracket | 44 | vertical actuator |
| 16 | gantry | 46 | cap screw |
| 18 | human-machine interface | 48 | hole |
| 20 | foot portion | 50 | dowel pin |
| 22 | pinion gear | 52 | screw |
| 24 | rack | 60 | eccentric bushing |
| 26 | rail | 62 | head |
| 28 | belt | 64 | hole |
| 30 | roller | 66 | cam portion |
| 34 | adjustment bar | 68 | central axis |
| 36 | plate | | |
| 38 | pad | | |

## Claims

1. A gantry table, comprising:
a table main body (12);
a gantry rail (26) extending along the table main body (12);
a gantry rack (24) extending along the table main body (12);
a gantry (16) comprising a pinion gear (22) that engages the gantry rack (24), wherein the pinion gear (22) drives the gantry (16) to move along the table main body (12) on the gantry rail (26);
a tool bracket (14) movable along the gantry (16);
a first adjustment bar (34);
a second adjustment bar (34), wherein the gantry rail (26) and the gantry rack (24) are attached to both of the first adjustment bar (34) and the second adjustment bar (34);
a joiner plate joining the first adjustment bar (34) to the second adjustment bar (34);
a vertical adjustment configured to adjust a vertical position of the joiner plate with respect to the table main body (12); and
a depth adjustment (42) configured to adjust a lateral position of the joiner plate with respect to the table main body (12).

2. The gantry table of claim 1, wherein the table main body (12) comprises a leveling pad aligned with the joiner plate, wherein the vertical adjustment is located on the leveling pad.

3. The gantry table of claim 2, wherein the vertical adjustment comprises a jacking plate attached to the leveling pad, and a screw passing through the jacking plate for adjusting said vertical position of the joiner plate, and/or
wherein the vertical adjustment comprises a jacking plate, and a screw extending between the jacking plate and the joinder plate for adjusting said vertical position of the joiner plate, and/or
wherein the vertical adjustment comprises an eccentric bushing (60) having a cam portion and a through hole (64) that is offset from a central axis (68) of the cam portion.

4. The gantry table of any of the claims 1 to 3, wherein the depth adjustment (42) comprises a set screw.

5. The gantry table of any of the claims 1 to 4, further comprising a first dowel pin (50) for positioning the first adjustment bar on the joiner plate, and a second dowel pin (50) for positioning the second adjustment bar on the joiner plate.

6. A gantry table, comprising:
a table main body (12);
a gantry rail (26) extending along the table main body (12);
a gantry rack (24) extending along the table main body (12);
a gantry (16) comprising a pinion gear (22) that engages the gantry rack (24), wherein the pinion gear (22)drives the gantry (16) to move along the table main body (12) on the gantry rail (26);
a tool bracket (14) movable along the gantry (16);
a plurality of adjustment bars (34), wherein the plurality of adjustment bars (34) adjustably attach the gantry rail (26) and the gantry rack (24) to the table main body (12);
a plurality of depth adjustments (42) configured to adjust lateral positions of the plurality of adjustment bars (34) with respect to the table main body (12); and
a plurality of vertical adjustments configured to adjust vertical positions of the plurality of adjustment bars (34) with respect to the table main body (12).

7. The gantry table of any of the claims 1 to 6, further comprising a plurality of joiner plates, wherein each of the joiner plates connects one of the adjustment bars to another one of the adjustment bars (34).

8. The gantry table of any of the claims 6 or 7, wherein the plurality of vertical adjustments includes a jacking plate and a screw extending between the jacking plate and one of the joiner plates, and/or
wherein the plurality of depth adjustments (42) comprise set screws for adjusting the lateral positions of the plurality of adjustment bars with respect to the table main body (12).

9. The gantry table of any of the claims 1 to 8, further comprising a plurality of leveling pads attached to the table main body (12), wherein each leveling pad is located between the table main body (12) and one of the joiner plates, and one of the vertical adjustments is attached to each leveling pad.

10. The gantry table of any of the claims 6 to 9, wherein the plurality of vertical adjustments comprise eccentric bushings (60) each having a cam portion and a through hole that is offset from a central axis (68) of the cam portion.

11. The gantry table of any of the claims 1 to 10, further comprising a plurality of dowel pins (50) for positioning the plurality of adjustment bars (34) along the table main body (12).

12. A plasma cutting table (10), comprising:
a table main body;
a gantry rail (26) extending along the table main body;
a gantry rack (24) extending along the table main body;
a gantry (16) comprising a pinion gear (22) that engages the gantry rack (24), wherein the pinion gear (22) drives the gantry (16) to move along the table main body on the gantry rail (26);
a plasma torch bracket movable along the gantry (16);
a first adjustment bar (34);
a second adjustment bar (34), wherein the gantry rail (26) and the gantry rack (24) are attached to both of the first adjustment bar (34) and the second adjustment bar (34);
a joiner plate joining the first adjustment bar (34) to the second adjustment bar (34);
a jacking plate;
a first screw adjustment extending between the jacking plate and the joiner plate and configured for adjusting a vertical position of the joiner plate with respect to the jacking plate; and
a second screw adjustment configured for adjusting a lateral position of the joiner plate with respect to the table main body.

13. The plasma cutting table (10) of claim 12, wherein the table main body comprises a leveling pad aligned with the joiner plate, wherein the jacking plate is located on the leveling pad, wherein, preferably, the leveling pad is located between the table main body and the joiner plate.

14. The plasma cutting table (10) of claim 12 or 13, wherein the second screw adjustment adjusts a lateral offset of the joiner plate from the leveling pad.

15. The plasma cutting table (10) of any of the claims 12 to 14, further comprising a first dowel pin (50) for positioning the first adjustment bar (34) on the joiner plate, and a second dowel pin (50) for positioning the second adjustment bar (34) on the joiner plate.
